# EUROPÄISCHE PATENTSCHRIFT

(11) **EP 2 608 976 B1**
(45) Veröffentlichungstag und Bekanntmachung des Hinweises auf die Patenterteilung: **16.03.2016**
(21) Anmeldenummer: 11755257.0
(22) Anmeldetag: 17.08.2011
(51) Int. Cl.: B60K 6/445, B60K 6/48, F16H 37/10, F16H 37/08

(54) **HYBRIDANTRIEBSORDNUNG FÜR EIN KRAFTFAHRZEUG**
HYBRID DRIVE SYSTEM FOR A MOTOR VEHICLE
SYSTÈME DE PROPULSION HYBRIDE POUR UN VÉHICULE À MOTEUR

(30) Priorität: 24.08.2010 DE 102010035205
(43) Veröffentlichungstag der Anmeldung: 03.07.2013
(73) Patentinhaber: Volkswagen Aktiengesellschaft, 38440 Wolfsburg (DE)
(72) Erfinder: SCHOLZ, Norbert, 38106 Braunschwieg (DE)
(86) Internationale Anmeldenummer: PCT/EP2011/004127
(87) Internationale Veröffentlichungsnummer: WO 2012/025203

(56) Entgegenhaltungen:
- DE-A1-102004 042 007
- DE-A1-102005 014 332
- JP-A- 2005 112 019
- US-A1- 2004 058 769
- US-A1- 2005 169 765
- US-A1- 2008 009 380

## Beschreibung

### Gebiet der Erfindung

Die Erfindung bezieht sich auf eine Hybridantriebsanordnung für ein Kraftfahrzeug, deren Elemente wenigstens abschnittsweise in einem Gehäuse enthalten sind.

### Stand der Technik

Hybridantriebsanordnungen in Form leistungsverzweigter Getriebe sind dem Fachmann in vielfacher Ausgestaltung bekannt. Derartige Antriebsanordnungen umfassen eine erste elektrische Maschine, die üblicherweise als Innenläufer ausgebildet und sowohl im motorischen als auch im generatorischen Betrieb betreibbar ist, sowie eine zweite elektrische Maschine, die üblicherweise ebenfalls als Innenläufer ausgebildet und sowohl im motorischen als auch im generatorischen Betrieb betreibbar ist. Die elektrischen Maschinen sind jeweils über ein Planetengetriebe mit Hohlrad, Sonnenrad und einem Satz drehbar auf einem Steg montierter Planetenräder mit einer eingangsseitigen Antriebs- und/oder einer ausgangsseitigen Abtriebswelle gekoppelt. Weiter sind die elektrischen Maschinen über eine Leistungselektronik sowohl untereinander als auch mit einem elektrischen Energiespeicher, insbesondere einem Akkumulator verbunden. Nachteilig bei derartigen Hybridantriebsanordnungen ist der relativ hohe Blindleistungsanteil im mechanischen Zweig, wenn die Hybridantriebsanordnung im leistungsverzweigten Modus arbeitet. Aufgrund von unvermeidbaren Reibungsverlusten führt auch der theoretisch verlustfreie Blindleistungsanteil im realen Fall zu Verlusten, die insbesondere im Hinblick auf eine möglichst effiziente Energieausnutzung unerwünscht sind. Aus der US 2005/169765 A1 ist eine gattungsgemässe Hybridantriebsanordnung bekannt, wo ein einfacher Planetenradsatz einen Verbrennungsmotor mit einer ersten E-Maschine und einer Ausgangswelle verbindet, und ein Ravigneaux-Planetenradsatz eine zweite E-Maschine mit der Ausgangswelle verbindet.
Weiterhin sind aus der DE 10 2005 014 332 A1 und JP 2005-112019 A Hybridantriebsanordnungen bekannt, bei den ein einfacher Planetenradsatz einen Verbrennungsmotor mit einer ersten E-Maschine und einem Ravigneaux-Planetenradsatz verbindet, wobei der Ravigneaux-Planetenradsatz eine zweite E-Maschine, den Verbrennungsmotor und den einfacher Planetenradsatz mit der Ausgangswelle verbindet. Die aus dem Stand der Technik bekannte Anordnungen sind noch nicht optimal ausgebildet.

### Aufgabenstellung

Es ist die Aufgabe der vorliegenden Erfindung eine Hybridantriebsanordnung für ein Kraftfahrzeug zur Verfügung zu stellen, das wenigstens in einigen Arbeitsbereichen blindleistungsfrei arbeitet und erhöhte Effizienz aufweist.

### Darlegung der Erfindung

Eine erfindungsgemäße Hybridantriebsanordnung für ein Kraftfahrzeug umfasst ein Gehäuse, in welchem wenigstens abschnittsweise enthalten sind:
- eine eingangsseitige Antriebswelle (12),
- eine ausgangsseitige Abtriebswelle (14),
- eine erste elektrische Maschine (20) mit einem gehäusefesten, äußeren Stator (22) und einem innenliegenden Rotor (24),
- eine zweite elektrische Maschine (30) mit einem gehäusefesten, äußeren Stator (32) und einem innenliegenden Rotor (34), die der ersten elektrischen Maschine (20) axial benachbart angeordnet ist,
- ein erstes Planetengetriebe (40), umfassend ein Hohlrad (42), ein Sonnenrad (44) und einen mit dem Hohlrad (42) und dem Sonnenrad (44) kämmenden, drehbar auf einem Steg (46) montierten Satz von Planetenrädern (48), wobei das erste Planetengetriebe (40) die erste elektrischen Maschine (20) mit der Antriebswelle (12) und der Abtriebswelle (14) koppelt, und
- ein zweites, als Ravigneaux-Getriebe ausgebildetes Planetengetriebe (50), umfassend ein Hohlrad (52), ein erstes Sonnenrad (54), einen mit dem Hohlrad (52) und dem ersten Sonnenrad (54) kämmenden, drehbar auf einem Steg (56) montierten Satz von Langplanetenrädern (58), ein zweites Sonnenrad (55) und einen mit dem Satz von Langplanetenrädern (58) und dem zweiten Sonnenrad (55) kämmenden, drehbar auf dem Steg (56) montierten Satz von Kurzplanetenrädern (59), wobei das zweite Planetengetriebe (50) das erste Planetengetriebe mit der zweiten elektrische Maschine (30) koppelt, und
wobei
- der Steg (46) des ersten Planetengetriebes (40) mit dem mit der Abtriebswelle (14) fest verbundenen Hohlrad (52) des zweiten Planetengetriebes (50) gekoppelt ist,
- der Steg (56) des zweiten Planetengetriebes (50) mit dem mit der Antriebswelle (12) fest verbundenen Hohlrad (42) des ersten Planetengetriebes (40) mittels einer ersten Kupplung (70) verbindbar ist,
- der Rotor (24) der ersten elektrischen Maschine (20) mit dem Sonnenrad (44) des ersten Planetengetriebes (40) fest verbunden ist,
- der Rotor (34) der zweiten elektrischen Maschine (30) mit dem ersten Sonnenrad (64) des zweiten Planetengetriebes (50) fest verbunden ist und
- das zweite Sonnenrad des zweiten Planetengetriebes (50) mittels einer ersten Bremse (80) mit dem Gehäuse verbindbar ist.

Bevorzugte Ausführungsformen der Erfindung sind Gegenstand der abhängigen Ansprüche. Im Rahmen dieser Beschreibung wird der Begriff "Kopplung" bzw. "gekoppelt" weit verstanden und umfasst insbesondere die feste Verbindung einerseits und die schaltbare Kopplung bzw. Verbindbarkeit andererseits.

"Feste Verbindung" bzw. "fest verbunden" bedeutet im Rahmen der vorliegenden Beschreibung einen nicht (mittels Schaltelementen) trennbaren, grundsätzlich zur Momentenübertragung geeigneten Wirkschluss zwischen zwei Elementen. Dies kann insbesondere eine drehfeste Verbindung sein, bei der die verbundenen Elemente stets eine Drehzahldifferenz von Null aufweisen. Andererseits sollen im Rahmen der vorliegenden Beschreibung auch beispielsweise über eine Übersetzungsstufe dauerhaft, d.h. nicht (mittels Schaltelementen) trennbar, miteinander gekoppelte Elemente als "fest verbunden" verstanden werden.

"Schaltbare Verbindung" bzw. "schaltbar verbunden" oder "verbindbar" bezeichnet im Rahmen der vorliegenden Beschreibung eine Kopplung zwischen zwei Elementen, die mittels eines Schaltelementes von einem momentenübertragenden, verbundenen Zustand in einen keine Momente übertragenden getrennten Zustand und umgekehrt überführbar ist.

Ein wesentliches Merkmal der vorliegenden Erfindung ist es, dass eines der Planetengetriebe, die zur Kopplung der beiden elektrischen Maschinen mit der Antriebs- und/oder der Abtriebswelle vorgesehen sind, als Ravigneaux-Satz ausgebildet ist. Unter einem Ravigneaux-Satz oder, synonym, einem Ravigneaux-Getriebe versteht der Fachmann ein Planetengetriebe mit einem gemeinsamen Hohlrad, einem gemeinsamen Steg oder, synonym, Planetenträger, zwei Sonnenrädern unterschiedlicher Größe und einem doppelten Planetensatz, wobei ein Satz langer Planeten, bevorzugt Stufenplaneten, mit dem Hohlrad und einem der Sonnenräder und ein Satz kurzer Planeten mit den langen Planeten, bevorzugt mit deren kleinerer Stufe, und dem anderen Sonnenrad kämmt.

Wie es aus dem Stand der Technik bekannt ist, übernimmt das hier als erstes Planetengetriebe bezeichnetes Planetengetriebe die Ankopplung der ersten elektrischen Maschine. Das hier als zweites Planetengetriebe bezeichnete Planetengetriebe übernimmt einerseits die Ankopplung der zweiten elektrischen Maschine, wie dies aus dem Stand der Technik ebenfalls bekannt ist. Gleichzeitig übernimmt der Ravigneaux-Satz, der sich funktional auch als zwei einfache Planetengetriebe denken lässt, eine Kopplung zwischen dem ersten Planetengetriebe und dem funktional zweiten Getriebe. Mit anderen Worten wird ein funktionales Zwischengetriebe realisiert, ohne dass ein zusätzliches tatsächliches Planetengetriebe installiert werden müsste. Dies hat gegenüber der funktional analogen Bauform mit drei einfachen Planetengetrieben den Vorteil des geringeren Bauraumes und der Reduktion der Anzahl drehender Teile.

Zur Vermeidung von Blindleistung ist das Ravigneaux-Getriebe in besonderer Weise angekoppelt. Insbesondere ist es symmetrisch mit dem ersten Planetengetriebe gekoppelt, indem kreuzweise der Steg und das Hohlrad des einen Planetengetriebes mit dem Hohlrad bzw. dem Steg des anderen Planetengetriebes gekoppelt sind. Hieraus ergibt sich ein blindleistungsfreier Bereich innerhalb des leistungsverzweigten Arbeitsmodus.

Dabei ist die Kopplung des Stegs des Ravigneaux-Getriebes mittels einer ersten Kupplung schaltbar mit dem Hohlrad des ersten Planetengetriebes gekoppelt, während der Steg des ersten Planetengetriebes mit dem Hohlrad des Ravigneaux-Getriebes fest verbunden ist. Diese Maßnahme erlaubt zusammen mit dem weiter erfindungsgemäßen Aspekt, wonach das zweite Sonnenrad des zweiten Ravigneaux-Getriebes mittels einer ersten Bremse mit dem Gehäuse verbindbar ist, d.h. entsprechend dem jeweiligen Schaltzustand der ersten Bremse frei drehen kann oder am Gehäuse festgelegt ist, außer rein elektrischen Betriebsmodi die Realisierung zweier leistungsverzweigter Betriebsmodi sowie eines festen mechanischen Gangs.

Schließlich ist vorgesehen, dass beide elektrische Maschinen jeweils an dem bzw. an einem Sonnenrad des ihnen zugeordneten Planetengetriebes angreifen. Hierdurch werden die Momente in wünschenswerter Weise minimiert.

Bei einer günstigen Weiterbildung der Erfindung ist vorgesehen, dass der Steg des ersten Planetengetriebes und das Hohlrad des zweiten Planetengetriebes, die erfindungsgemäß untereinander fest verbunden sind, gemeinsam mittels einer ersten Kupplung mit der Abtriebswelle verbindbar sind. Bei geschlossener erster Kupplung liegt der vorgenannte blindleistungsfreie, leistungsverzweigte Betriebsmodus vor. Ein Öffnen der ersten Kupplung eröffnet jedoch weitere Betriebszustände, die von der speziellen Ausgestaltung der Getriebeanordnung und dem aktuellen Schaltzustand eventueller weiterer Schaltelemente abhängen.

So kann bei einer Weiterbildung der Erfindung beispielsweise vorgesehen sein, dass der Rotor der zweiten elektrischen Maschine mittels einer zweiten Bremse mit dem Gehäuse verbindbar ist. Damit wird auch das fest mit dem Rotor der zweiten elektrischen Maschine verbundene erste Sonnenrad des Ravigneaux-Getriebes am Gehäuse festgelegt, sodass bei geschlossener erster Kupplung ein langer mechanischer Festgang realisiert wird.

Bevorzugt ist eine zweite Kupplung vorgesehen, mittels derer der Rotor der ersten elektrischen Maschine mit Antriebswelle verbindbar ist. Auch hierdurch lässt sich, wiederum bei geschlossener erster Kupplung jedoch geöffneter zweiter Bremse, ein langer (ggf. zusätzlicher) mechanischer Festgang realisieren.
Bei einer Weiterbildung dieser Ausführungsform ist vorgesehen, dass der Steg des ersten Planetengetriebes mittels einer dritten Kupplung mit der Abtriebswelle verbindbar ist. Bei allen vorgenannten Betriebsmodi wird diese dritte Kupplung geschlossen sein. Durch ein Öffnen der dritten Kupplung kann jedoch ein serieller Betriebsmodus realisiert werden. Hierzu sind zusätzlich die erste Bremse und die zweite Kupplung bei im Übrigen geöffneten Schaltelementen, d.h. zweiter Bremse und erster Kupplung, zu schließen.

Bei allen vorgenannten Ausführungsformen kann vorgesehen sein, dass die Antriebswelle mittels einer dritten Bremse mit dem Gehäuse verbindbar ist. Mittels dieser Bremse lässt sich im rein elektrischen Betrieb ein auf die Antriebswelle rückwirkendes Drehmoment mechanisch abstützen. Eine Abstützung eines solchen rückwirkenden Drehmomentes ist erforderlich, damit die beim rein elektrischen Betrieb stehende Verbrennungsmaschine, welche außerhalb des Gehäuses an die Antriebswelle angeschlossen ist, nicht leer mitdreht oder rückwärts läuft. Üblicherweise, d.h. gemäß Stand der Technik, erfolgt eine derartige Momentenabstützung nicht, sodass kein Moment am Sonnenrad des ersten Planetensatzes durch die erste elektrische Maschine im elektrischen Fahrmodus aufgebracht werden kann. Bei der bevorzugt vorgesehenen mechanischen Abstützung gegen das Gehäuse hingegen kann die erste elektrische Maschine unabhängig betrieben und zum Vortrieb des Kraftfahrzeugs benutzt werden.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1:: eine erste Ausführungsform einer erfindungsgemäßen Hybridantriebsanordnung,
- Figur 2:: eine zweite Ausführungsform der erfindungsgemäßen Hybridantriebsanordnung,
- Figur 3:: eine dritte Ausführungsform der erfindungsgemäßen Hybridantriebsanordnung,
- Figur 4:: eine vierte Ausführungsform der erfindungsgemäßen Hybridantriebsanordnung.

### Ausführliche Beschreibung bevorzugter Ausführungsformen

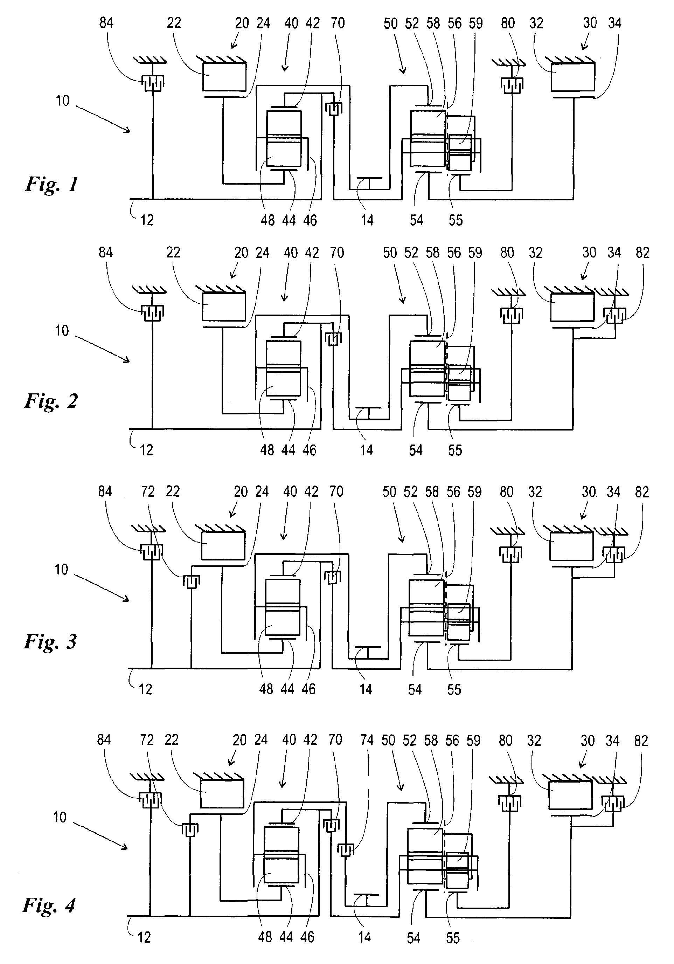

Die Figuren 1-4 zeigen verschiedene Ausführungsformen einer erfindungsgemäßen Hybridantriebsanordnung 10. In allen Figuren wiederkehrende Elemente sollen zunächst gemeinsam diskutiert werden. Im Anschluss sollen die Unterschiede zwischen den einzelnen Ausführungsformen erläutert werden. Gleiche Bezugszeichen in den Figuren deuten auf gleiche oder analoge Elemente hin.

Sämtliche dargestellten Hybridantriebsanordnungen 10 weisen eine eingangsseitige Antriebswelle 12 und eine ausgangsseitige Abtriebswelle 14 auf. Weiter weisen sämtliche dargestellten Hybridantriebsanordnungen 10 eine erste elektrische Maschine 20 und eine zweite elektrische Maschine 30 auf. Der Stator 22 der ersten elektrischen Maschine 20 ist drehfest mit einem nicht im Detail dargestellten Gehäuse verbunden. Der Rotor 24 der ersten elektrischen Maschine 20 ist radial innerhalb des Stators 22 drehbeweglich gelagert. Der Stator 32 der zweiten elektrischen Maschine 30 ist ebenfalls drehfest mit dem Gehäuse verbunden. Der Rotor 34 der zweiten elektrischen Maschine ist radial innerhalb des Stators 32 drehbeweglich gelagert. Die beiden elektrischen Maschinen 20, 30 sind axial benachbart zueinander angeordnet. Man spricht hier von einer sogenannten "In-line"-Konfiguration.

Zwischen den beiden elektrischen Maschinen 20, 30 sind zwei Planetengetriebe, nämlich das erste Planetengetriebe 40 und das zweite Planetengetriebe 50, welches als Ravigneaux-Getriebe ausgebildet ist, angeordnet. Das erste Planetengetriebe 40 weist ein Hohlrad 42, ein Sonnenrad 44 und einen Satz drehbeweglich auf einem Steg 46 gelagerter Planetenräder 48 auf. Das zweite Planetengetriebe 50 weist ein gemeinsames Hohlrad 52, ein erstes Sonnenrad 54, ein zweites Sonnenrad 55, einen Satz drehbeweglich auf einem Steg 56 gelagerter Langplanetenräder 58 und einen ebenfalls drehbeweglich auf dem Steg 56 gelagerter Kurzplanetenräder 59 auf.

Der Rotor 24 der ersten elektrischen Maschine 20 ist fest mit dem Sonnenrad 44 des ersten Planetengetriebes 40 verbunden. Der Rotor 34 der zweiten elektrischen Maschine 30 ist fest mit dem ersten Sonnenrad 54 des zweiten Planetengetriebes 50, welches mit den Langplanetenrädern 58 kämmt, verbunden. Der Angriff der elektrischen Maschinen 20, 30 an den Sonnenrädern 44, 54 führt zu einer Minimierung der Momente innerhalb der Getriebeanordnung.

Das mit den Kurzplanetenrädern 59 kämmende zweite Sonnenrad 55 des zweiten Planetengetriebes 50 kann mittels der ersten Bremse 80 am Gehäuse festgelegt werden.

Bei allen Ausführungsformen der Erfindung ist das Hohlrad 42 des ersten Planetengetriebes 40 über eine erste Kupplung 70 schaltbar mit dem Steg 56 des zweiten Planetengetriebes 50 gekoppelt und mit der Antriebswelle 12 fest verbunden. Der Steg 46 des ersten Planetengetriebes 40 ist bei allen Ausführungsformen mit dem Hohlrad 52 des zweiten Planetengetriebes 50 gekoppelt. Das Hohlrad 52 des zweiten Planetengetriebes 50 ist bei allen gezeigten Ausführungsformen mit der Abtriebswelle 14 fest verbunden. Diese besondere Kopplung des ersten und zweiten Planetengetriebes 40, 50 zeitigt die angestrebte Blindleistungsfreiheit wenigstens in einigen Arbeitsbereichen der Hybridantriebsanordnung 10.

Allen dargestellten Ausführungsformen gemeinsam ist noch eine hier als dritte Bremse 84 bezeichnete Bremse, die die Antriebswelle 12 schaltbar mit dem Gehäuse koppelt, d.h. die Antriebswelle 12 im geschlossenen Bremszustand am Gehäuse festlegen und im offenen Bremszustand für eine Rotationsbewegung freigeben kann. Der Fachmann wird erkennen, dass es die Wirkung der dritte Bremse 84 ist, ein von der ersten elektrischen Maschine 20 im rein elektrischen Betrieb des Kraftfahrzeugs aufgebrachtes Drehmoment, das über das erste und das zweite Planetengetriebe 40, 50 zur Antriebswelle 12 übertragen wird, anzustützen. Ohne die dritte Bremse 84 müsste diese Aufgabe von der zweiten elektrischen Maschine 30 allein übernommen werden. Dank der dritten Bremse 84 kann die erste elektrische Maschine 20 nunmehr stattdessen selbst einen Vortriebsbeitrag leisten.

Figur 1 zeigt eine Ausführungsform der Erfindung, bei der die Kopplung des Steges 46 des ersten Planetengetriebes 40 mit der Abtriebswelle 14 als feste Verbindung ausgeführt ist. Im Übrigen weist die Ausführungsform von Figur 1 alle vorgenannten, allen Ausführungsformen gemeinsamen Merkmale auf und verfügt insbesondere über die drei genannten Schaltelemente, nämlich die erste Kupplung 70, die erste Bremse 80 und die dritte Bremse 84. Je nach Schaltzustand ergeben sich folgende Betriebsmodi:
In einem ersten leistungsverzweigten Betriebsmodus ist die erste Bremse 80 geschlossen, d.h. das zweite Sonnenrad 55 des zweiten Planetengetriebes 50 ist am Gehäuse festgelegt. Die übrigen Schaltelemente sind offen. Hieraus ergibt sich ein mechanischer Weg von einer nicht dargestellten Verbrennungskraftmaschine, die an der Antriebswelle 12 ansetzt, über das erste Plantetengetriebe 40 zur Abtriebswelle 14. Die über das Sonnenrad 44 des ersten Planetengetriebes 40 angekoppelte erste elektrische Maschine 20 kann dabei entweder generatorisch betrieben werden oder motorisch Drehmoment zum Antrieb beitragen. Das zweite Planetengetriebe 50, dessen zweites Sonnenrad 55 am Gehäuse festgelegt ist und dessen Steg 56 aufgrund der geöffneten ersten Kupplung 70 frei drehen kann, wirkt als reine Übersetzungsstufe zwischen der zweiten elektrischen Maschine 30 und der Abtriebswelle 14. Die zweite elektrische Maschine 30 kann in diesem Zustand entweder generatorisch betrieben werden oder motorisch zum Abtrieb beitragen.

Bei zusätzlich geschlossener erster Kupplung 70 ergibt sich ein mechanischer Festgang, der das erste Planetengetriebe 40 überbrückt, sodass das Moment der Verbrennungskraftmaschine über das erste Planetengetriebe 40 und zweite Planetengetriebe 50 zur Abtriebswelle 14 leitet.

Ein zweiter leistungsverzweigter Betriebsmodus ist realisierbar, indem nur die erste Kupplung 70 geschlossen und die übrigen Schaltelemente geöffnet sind. In diesem Betriebsmodus wirkt das Ravigneaux-Getriebe 50 aufgrund des frei drehenden Satzes Kurzplanetenräder 59 als einfaches Planetengetriebe, in welchem die Leistung verzweigt wird.

Schließlich sind zwei rein elektrische Betriebsmodi realisierbar. In beiden elektrischen Modi ist die dritte Bremse 84 geschlossen. Von den beiden übrigen Schaltelementen, d.h. von der ersten Kupplung 70 und der ersten Bremse 80, ist jeweils eines geschlossen und das andere geöffnet. Die beiden Planetengetriebe 40, 50 wirken dabei als jeweils reine Übersetzungsstufen.

Die Ausführungsform von Figur 2 unterscheidet sich von derjenigen von Figur 1 durch eine zweite Bremse 82, mittels derer der Rotor 34 der zweiten elektrischen Maschine 30 am Gehäuse festlegbar ist. Mit der Festlegung des Rotors 34 der zweiten elektrischen Maschine 30 wird auch das erste Sonnenrad 54 des zweiten Planetengetriebes 50, welches mit dem Rotor 34 fest verbunden ist, am Gehäuse festgelegt. Hierdurch lässt sich ein zusätzlicher, langer mechanischer Festgang realisieren, nämlich indem die zweite Bremse 82 sowie die erste Kupplung 70 geschlossen und die übrigen Schaltelemente geöffnet werden. Das Moment der Verbrennungskraftmaschine wird so unter Umgehung des ersten Planetengetriebes 40 über die Kurzplanetenräder 59 des zweiten Planetengetriebes 50 zur Abtriebswelle 14 geleitet.

Die übrigen Betriebsmodi werden realisiert, wie oben im Zusammenhang mit der Ausführungsform von Figur 1 erläutert, jeweils bei offener zweiter Bremse 82 realisiert.

Figur 3 zeigt eine Ausführungsform, die sich von derjenigen von Figur 2 durch eine zweite Kupplung 72 unterscheidet, mit welcher der Rotor 24 der ersten elektrischen Maschine 20 mit der Antriebswelle 12 verbindbar ist. Hierdurch lässt sich ein weiterer langer mechanischer Festgang realisieren, nämlich indem die erste Kupplung 70 und die zweite Kupplung 72 geschlossen und die übrigen Schaltelemente geöffnet werden.

Die übrigen Betriebsmodi werden realisiert, wie oben im Zusammenhang mit den Figuren 1 und 2 erläutert, wobei die zweite Kupplung 72 jeweils geöffnet ist.

Figur 4 schließlich zeigt eine Ausführungsform der Erfindung, die sich von der Ausführungsform gemäß Figur 3 durch eine zusätzliche dritte Kupplung 74 unterscheidet, welche die bei den übrigen Ausführungsformen feste Verbindung zwischen dem Steg 46 des ersten Planetengetriebes 40 mit der Abtriebswelle 14 durch eine schaltbare Kopplung ersetzt. Durch diese zusätzliche Kupplung 74 ergibt sich ein zusätzlicher, serieller Betriebsmodus, bei dem die erste Kupplung 70 und die zweite Kupplung 72 geschlossen und die übrigen Schaltelemente, insbesondere auch die zusätzliche, dritte Kupplung 74 geöffnet sind. In diesem Schaltzustand ist die mechanische Verbindung zwischen der Antriebswelle 12 und der Abtriebswelle 14 vollständig unterbrochen. Das Moment der Verbrennungskraftmaschine wird vollständig zum motorischen Betrieb der ersten elektrischen Maschine 20 genutzt. Die erzeugte elektrische Leistung wird über eine in den Figuren nicht dargestellte, jedoch bei allen Ausführungsformen vorhandene Leistungselektronik zur zweiten elektrischen Maschine 30 transferiert, die ihrerseits die Abtriebswelle 14 rein elektrisch antreibt. Das zweite Planetengetriebe 50 wirkt dabei als reine Übersetzungsstufe, da die erste Bremse 80 geschlossen ist.

Alle übrigen Betriebsmodi arbeiten, wie oben in Verbindung mit den Figuren 1 bis 3 beschrieben, wobei die dritte Kupplung 74 jeweils geschlossen ist.

### Bezugszeichenliste

- 10: Hybridantriebsanordnung
- 12: Antriebswelle
- 14: Abtriebswelle
- 20: erste elektrische Maschine
- 22: Stator von 20
- 24: Rotor von 20
- 30: zweite elektrische Maschine
- 32: Stator von 30
- 34: Rotor von 30
- 40: erstes Planetengetriebe
- 42: Hohlrad von 40
- 44: Sonnenrad von 40
- 46: Steg von 40
- 48: Planetenräder von 40
- 50: zweites Planetengetriebe (Ravigneaux-Getriebe)
- 52: Hohlrad von 50
- 54: erstes Sonnenrad von 50
- 55: zweites Sonnenrad von 50
- 56: Steg von 50
- 58: Langplanetenräder von 50
- 59: Kurzplanetenräder von 50
- 70: erste Kupplung
- 72: zweite Kupplung
- 74: dritte Kupplung
- 80: erste Bremse
- 82: zweite Bremse
- 84: dritte Bremse

## Patentansprüche

1. Hybridantriebsahordnung für ein Kraftfahrzeug, umfassend ein Gehäuse und darin wenigstens abschnittsweise enthalten
- eine eingangsseitige Antriebswelle (12),
- eine ausgangsseitige Abtriebswelle (14),
- eine erste elektrische Maschine (20) mit einem gehäusefesten, äußeren Stator (22) und einem innenliegenden Rotor (24),
- eine zweite elektrische Maschine (30) mit einem gehäusefesten, äußeren Stator (32) und einem innenliegenden Rotor (34), die der ersten elektrischen Maschine (20) axial benachbart angeordnet ist,
- ein erstes Planetengetriebe (40), umfassend ein Hohlrad (42), ein Sonnenrad (44) und einen mit dem Hohlrad (42) und dem Sonnenrad (44) kämmenden, drehbar auf einem Steg (46) montierten Satz von Planetenrädern (48), wobei das erste Planetengetriebe (40) die erste elektrischen Maschine (20) mit der Antriebswelle (12) und der Abtriebswelle (14) koppelt, und
- ein zweites, als Ravigneaux-Getriebe ausgebildetes Planetengetriebe (50), umfassend ein Hohlrad (52), ein erstes Sonnenrad (54), einen mit dem Hohlrad (52) und dem ersten Sonnenrad (54) kämmenden, drehbar auf einem Steg (56) montierten Satz von Langplanetenrädern (58), ein zweites Sonnenrad (55) und einen mit dem Satz von Langplanetenrädern (58) und dem zweiten Sonnenrad (55) kämmenden, drehbar auf dem Steg (56) montierten Satz von Kurzplanetenrädern (59), wobei das zweite Planetengetriebe (50) das erste Planetengetriebe mit der zweiten elektrische Maschine (30) koppelt, und
- der Rotor (24) der ersten elektrischen Maschine (20) mit dem Sonnenrad (44) des ersten Planetengetriebes (40) fest verbunden ist,
- der Rotor (34) der zweiten elektrischen Maschine (30) mit dem ersten Sonnenrad (64) des zweiten Planetengetriebes (50) fest verbunden ist und
- das zweite Sonnenrad des zweiten Planetengetriebes (50) mittels einer ersten Bremse (80) mit dem Gehäuse verbindbar ist,
**dadurch gekennzeichnet, dass**
- der Steg (46) des ersten Planetengetriebes (40) mit dem mit der Abtriebswelle (14) fest verbundenen Hohlrad (52) des zweiten Planetengetriebes (50) gekoppelt ist,
- der Steg (56) des zweiten Planetengetriebes (50) mit dem mit der Antriebswelle (12) fest verbundenen Hohlrad (42) des ersten Planetengetriebes (40) mittels einer ersten Kupplung (70) verbindbar ist.

2. Hybridantriebsanordnung nach Anspruch 1,
**dadurch gekennzeichnet,**
**dass** der Rotor (34) der zweiten elektrischen Maschine (30) mittels einer zweiten Bremse (82) mit dem Gehäuse verbindbar ist.

3. Hybridantriebsanordnung nach einem der vorangehenden Ansprüche,
**dadurch gekennzeichnet, dass**
der Rotor (24) der ersten elektrischen Maschine (20) mittels einer zweiten Kupplung (72) mit Antriebswelle (12) verbindbar ist.

4. Hybridantriebsanordnung nach Anspruch 3,
**dadurch gekennzeichnet, dass**
der Steg (46) des ersten Planetengetriebes (40) mittels einer dritten Kupplung (74) mit der Abtriebswelle verbindbar ist.

5. Hybridantriebsanordnung nach einem der vorangehenden Ansprüche,
**dadurch gekennzeichnet, dass**
die Antriebswelle (12) mittels einer dritten Bremse (84) mit dem Gehäuse verbindbar ist.

## Claims

1. Hybrid drive arrangement for a motor vehicle, comprising a housing and at least partially contained therein
- an input-side drive shaft (12),
- an output-side driven shaft (14),
- a first electric machine (20) with a housing-mounted outer stator (22) and an inner rotor (24),
- a second electric machine (30) with a housing-mounted outer stator (32) and an inner rotor (34), which second electric machine is arranged axially adjacent to the first electric machine (20),
- a first planetary gearing (40) comprising a ring gear (42), a sun gear (44) and a set of planet gears (48) mounted rotatably on a web (46) and meshing with the ring gear (42) and the sun gear (44), wherein the first planetary gearing (40) couples the first electric machine (20) to the drive shaft (12) and the driven shaft (14), and
- a second planetary gearing (50) embodied as a Ravigneaux gearing, comprising a ring gear (52), a first sun gear (54), a set of long planet gears (58) mounted rotatably on a web (56) and meshing with the ring gear (52) and the first sun gear (54), a second sun gear (55) and a set of short planet gears (59) mounted rotatably on the web (56) and meshing with the set of long planet gears (58) and the second sun gear (55), wherein the second planetary gearing (50) couples the first planetary gearing to the second electric machine (30), and
- the rotor (24) of the first electric machine (20) is fixedly connected to the sun gear (44) of the first planetary gearing (40),
- the rotor (34) of the second electric machine (30) is fixedly connected to the first sun gear (64) of the second planetary gearing (50), and
- the second sun gear of the second planetary gearing (50) can be connected to the housing by means of a first brake (80),
**characterized in that**
- the web (46) of the first planetary gearing (40) is coupled to the ring gear (52) of the second planetary gearing (50) that is fixedly connected to the driven shaft (14),
- the web (56) of the second planetary gearing (50) can be connected by means of a first clutch (70) to the ring gear (42) of the first planetary gearing (40) that is fixedly connected to the drive shaft (12).

2. Hybrid drive arrangement according to Claim 1,
**characterized in that**
the rotor (34) of the second electric machine (30) can be connected to the housing by means of a second brake (82).

3. Hybrid drive arrangement according to one of the preceding claims,
**characterized in that**
the rotor (24) of the first electric machine (20) can be connected to the drive shaft (12) by means of a second clutch (72).

4. Hybrid drive arrangement according to Claim 3,
**characterized in that**
the web (46) of the first planetary gearing (40) can be connected to the driven shaft by means of a third clutch (74).

5. Hybrid drive arrangement according to one of the preceding claims,
**characterized in that**
the drive shaft (12) can be connected to the housing by means of a third brake (84).

## Revendications

1. Système de propulsion hybride pour un véhicule à moteur, comprenant un carter qui contient, dans au moins certaines parties de celui-ci,
- un arbre primaire (12) côté entrée,
- un arbre secondaire (14) côté sortie,
- un premier moteur électrique (20) comportant un stator extérieur (22), fixé au carter, et un rotor intérieur (24),
- un deuxième moteur électrique (30) comportant un stator extérieur (32), fixé au carter, et un rotor intérieur (34), le deuxième moteur électrique étant disposé de manière axialement adjacente au premier moteur électrique (20),
- un premier train planétaire (40), comprenant une couronne (42), un pignon planétaire (44) et un jeu de satellites (48) montés de manière rotative sur un porte-satellites (46) et s'engrenant avec la couronne (42) et avec le pignon planétaire (44), dans lequel le premier train planétaire (40) accouple le premier moteur électrique (20) avec l'arbre primaire (12) et avec l'arbre secondaire (14), et
- un deuxième train planétaire (50), réalisé sous la forme d'un train d'engrenages de Ravigneaux, comprenant une couronne (52), un premier pignon planétaire (54), un jeu de satellites longs (58) montés de manière rotative sur un porte-satellites (56) et s'engrenant avec la couronne (52) et avec le premier pignon planétaire (54), un deuxième pignon planétaire (55) et un jeu de satellites courts (59) montés de manière rotative sur le porte-satellites (56) et s'engrenant avec le jeu de satellites longs (58) et avec le deuxième pignon planétaire (55), dans lequel le deuxième train planétaire (50) accouple le premier train planétaire avec le deuxième moteur électrique (30), et
- le rotor (24) du premier moteur électrique (20) est solidement fixé au pignon planétaire (44) du premier train planétaire (40),
- le rotor (34) du deuxième moteur électrique (30) est solidement fixé au premier pignon planétaire (64) du deuxième train planétaire (50) et
- le deuxième pignon planétaire du deuxième train planétaire (50) peut être relié au carter au moyen d'un premier frein (80),
**caractérisé en ce que**
- le porte-satellites (46) du premier train planétaire (40) est accouplé à la couronne (52) du deuxième train planétaire (50), la couronne étant solidement fixée à l'arbre secondaire (14),
- le porte-satellites (56) du deuxième train planétaire (50) peut être relié à la couronne (42) du premier train planétaire (40), la couronne étant solidement fixée à l'arbre primaire (12) au moyen d'un premier embrayage (70).

2. Système de propulsion hybride selon la revendication 1, **caractérisé en ce que**
le rotor (34) du deuxième moteur électrique (30) peut être relié au carter au moyen d'un deuxième frein (82).

3. Système de propulsion hybride selon l'une quelconque des revendications précédentes, **caractérisé en ce que**
le rotor (24) du premier moteur électrique (20) peut être relié à l'arbre primaire (12) au moyen d'un deuxième embrayage (72).

4. Système de propulsion hybride selon la revendication 3, **caractérisé en ce que**
le porte-satellites (46) du premier train planétaire (40) peut être relié à l'arbre secondaire au moyen d'un troisième embrayage (74).

5. Système de propulsion hybride selon la revendication 4, **caractérisé en ce que**
l'arbre primaire (12) peut être relié au carter au moyen d'un troisième frein (84).
